# EUROPEAN PATENT SPECIFICATION

(11) **EP 1 892 502 B1**
(45) Date of publication and mention of the grant of the patent: **13.10.2010**
(21) Application number: 07016298.7
(22) Date of filing: 20.08.2007
(51) Int. Cl.: G01B 11/06

(54) **Surface position detector and laser beam processing machine**
Oberflächenpositionsdetektor und Laserstrahlverarbeitungsgerät
Détecteur de position de surface et machine de traitement de faisceau laser

(30) Priority: 21.08.2006 JP 2006224313
(43) Date of publication of application: 27.02.2008
(73) Proprietor: Disco Corporation, Tokyo 143-8580 (JP)
(72) Inventor: Morikazu, Hiroshi, Ota-ku Tokyo 143-8580 (JP); Kaneuchi, Yasuomi, Ota-ku Tokyo 143-8580 (JP); Nehashi, Kouichi, Ota-ku Tokyo 143-8580 (JP); Kobayashi, Yutaka, Ota-ku Tokyo 143-8580 (JP); Kawagishi, Eri, Ota-ku Tokyo 143-8580 (JP)
(74) Representative: Ryan, Anne Mary

(56) References cited:
- JP-A- 2006 187 782
- JP-A- 2006 247 674
- US-A- 4 017 188
- US-A1- 2006 119 691

## Description

### Field of the Invention

The present invention relates to a surface position detector suitable for detecting the position of the surface of a workpiece, especially the position of the bottom surface of a via hole formed in the workpiece and a laser beam processing machine equipped with this surface position detector.

### Description of the Prior Art

In the production process of a semiconductor device, a plurality of areas are sectioned by dividing lines called "streets" arranged in a lattice pattern on the front surface of a substantially disk-like semiconductor wafer, and a device such as IC or LSI is formed in each of the sectioned areas. Individual semiconductor chips are manufactured by cutting this semiconductor wafer along the streets to divide it into the areas each having a device formed thereon.

To reduce the size and increase the number of functions of an apparatus, a modular structure for connecting the electrodes of a plurality of semiconductor chips which are formed in a layer has been commercially utilized and disclosed by JP-A 2003-163323. This modular structure is such that via holes reaching electrodes are formed from the rear side at positions where the electrodes are formed on the front surface of a semiconductor wafer, and a conductive material such as aluminum or the like to be connected to the electrodes is embedded in the via holes.

The via holes formed in the above semiconductor wafer are generally formed by a drill. Therefore, the diameters of the via holes formed in the semiconductor wafer are as small as 100 to 300 µm, and hence, there is a problem that drilling the via holes by the drill is not satisfactory in terms of productivity.

To solve the above problem, the applicant of the present application proposes as JP-A 2006-247674 a laser beam processing machine capable of forming via holes efficiently in a workpiece such as a semiconductor wafer, etc. This laser beam processing machine comprises a processing-feed amount detection means for detecting the relative processing-feed amount between a chuck table for holding a workpiece and laser beam application means, a memory means for storing the X and Y coordinate values of via holes to be formed in the workpiece and a control means for controlling the laser beam application means based on the X and Y coordinate values of via holes stored in the memory means and a detection signal from the processing-feed amount detection means and is configured so as to apply a laser beam when the point of the X and Y coordinate values of a via hole to be formed in the workpiece reaches a position right below the condenser of the laser beam application means.

In the above method of forming a via hole by applying a laser beam from the rear surface of the semiconductor wafer, the application of the laser beam must be stopped not to make a hole in the electrode formed on the front surface of the semiconductor wafer. To this end, the application of the laser beam must be stopped when the via hole reaches the electrode. However, it is extremely difficult to detect that the via hole reaches the electrode, and there is a case where the via hole does not reach the electrode. Therefore, it is necessary to check if the via hole formed in the wafer reaches the electrode. If the via hole does not reach the electrode, it is desirably possible to detect the position of the bottom surface of the via hole so that the semiconductor wafer can be re-processed efficiently.

JP-A 2006 187782 discloses apparatus for laser beam machining along a predetermined processing plan line. The apparatus includes a condensing-point adjustment means to move the condensing point of the laser beam and a height position detection means to detect the height position of the irradiation area of the laser beam. The condensing-point adjustment means and the height position detection means being controlled by a control means.

US A- 4 017 188 discloses an optical surface profiling device for measuring the profile of surfaces having a characteristic one-directional lay with sufficient resolution to determine variations in the surface. This arrangement is based on a known method of optically measuring distances from a reference plane to a reflective surface, which is commonly known as "Simon's method".

US 2006 011961 discloses a laser beam processing machine capable of carrying out uniform processing by applying a pulse laser beam to a workpiece over the entire area from the processing-feed start position up to the processing-feed end position of a chuck table.

### Summary of the Invention

It is an object of the present invention to provide a surface position detector capable of detecting efficiently the position of the bottom surface of a via hole formed in a workpiece and a laser beam processing machine equipped with this surface position detector.

To attain the above object, according to the present invention, there is provided a surface position detector according to claims 1 and 2.

According to the present invention, there is also provided a laser beam processing machine equipped with the above surface position detector according to claim 3.

In the surface position detector of the present invention, a detection laser beam is applied to the exposed portion of the workpiece, its reflected light is received by the first light receiving device and the second light receiving device, and the ratio of the quantity of light received by the first light receiving device to the quantity of light received by the second light receiving device is calculated to obtain the height position of the exposed portion of the workpiece by collating the ratio with the control map. Therefore, even the height position of the bottom surface of the vie hole formed in the workpiece can be efficiently detected. Consequently, an imperfect via hole can be re-processed surely.

### Brief Description of the Drawings

Fig. 1 is a perspective view of a laser beam processing machine constituted according to the present invention;
Fig. 2 is a schematic block diagram showing the constitution of the laser beam application means and a surface position detector provided in the laser beam processing machine shown in Fig. 1;
Figs. 3(a) and 3(b) are explanatory diagrams showing that the application area is changed by the application position of a detection laser beam applied from the surface position detector shown in Fig. 2;
Fig. 4 is a control map showing the relationship between the ratio of a voltage value (V1) output from the first light receiving device to a voltage value (V2) output from the second light receiving device of the surface position detector shown in Fig. 2 and the height from the appropriate position of the bottom surface of a via hole;
Fig. 5 is a block diagram of another embodiment of a light receiving area restricting means constituting the surface position detector shown in Fig. 2;
Fig. 6 is a perspective view of a semiconductor wafer as a workpiece;
Fig. 7 is a partially enlarged plan view of the semiconductor wafer shown in Fig. 6;
Fig. 8 is a perspective view showing a state where the semiconductor wafer shown in Fig. 6 is put on the front surface of a protective tape mounted on an annular frame;
Fig. 9 is an explanatory showing the relationship between the semiconductor wafer shown in Fig. 6 which is held at a predetermined position of the chuck table of the laser beam processing machine shown in Fig. 1 and X and Y coordinates;
Fig. 10 is an explanatory diagram of a step of forming a via hole in the semiconductor wafer shown in Fig. 6 by the laser beam processing machine shown in Fig. 1;
Fig. 11 is an enlarged sectional view of the principal portion of the semiconductor wafer having via holes which have been formed by the laser processing step shown in Fig. 10;
Figs. 12 (a) and 12 (b) are explanatory diagrams of the step of detecting the depth of a via hole which is carried out by the surface position detector provided in the laser beam processing machine shown in Fig. 1; and
Fig. 13 is a diagram of an example of a decision map prepared by a control means provided in the laser beam processing machine shown in Fig. 1.

### Detailed Description of the Preferred Embodiments

Preferred embodiments of the present invention will be described in detail hereinbelow with reference to the accompanying drawings.

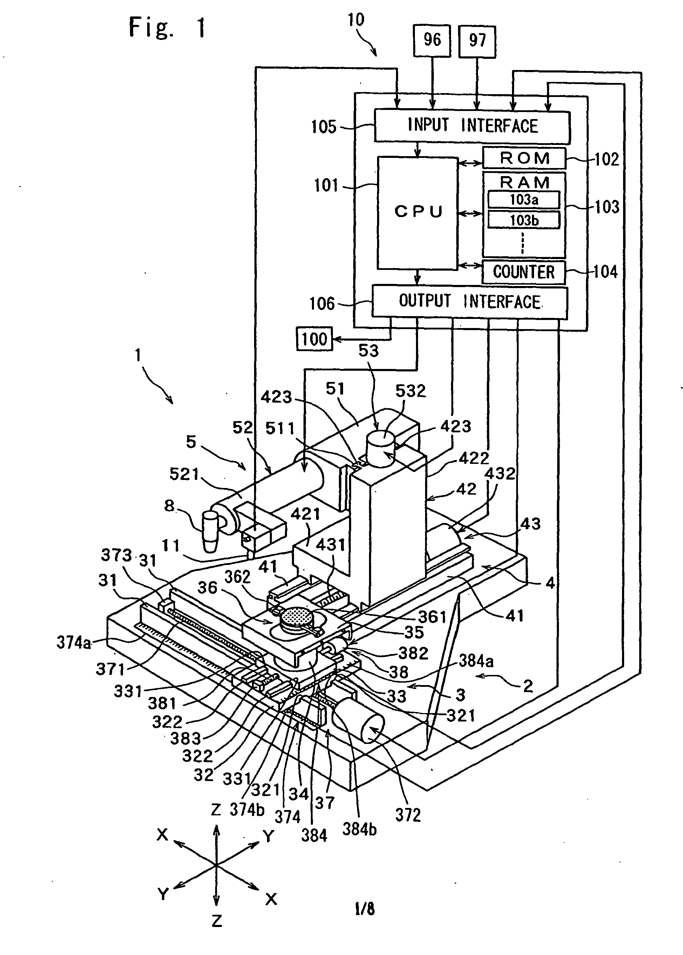

Fig. 1 is a perspective view of a laser beam processing machine equipped with a surface position detector constituted according to the present invention. The laser beam processing machine 1 shown in Fig. 1 comprises a stationary base 2, a chuck table mechanism 3 for holding a workpiece, which is mounted on the stationary base 2 in such a manner that it can move in a processing-feed direction (X direction) indicated by an arrow X, a laser beam application unit support mechanism 4 mounted on the stationary base 2 in such a manner that it can move in an indexing-feed direction (Y direction) indicated by an arrow Y perpendicular to the direction indicated by the arrow X, and a laser beam application unit 5 mounted on the laser beam application unit support mechanism 4 in such a manner that it can move in a direction (Z direction) indicated by an arrow Z.

The above chuck table mechanism 3 comprises a pair of guide rails 31 and 31 mounted on the stationary base 2 and arranged parallel to each other in the processing-feed direction indicated by the arrow X, a first sliding block 32 mounted on the guide rails 31 and 31 in such a manner that it can move in the processing-feed direction indicated by the arrow X, a second sliding block 33 mounted on the first sliding block 32 in such a manner that it can move in the indexing-feed direction indicated by the arrow Y, a support table 35 supported on the second sliding block 33 by a cylindrical member 34, and a chuck table 36 as a workpiece holding means. This chuck table 36 comprises an adsorption chuck 361 made of a porous material, and a workpiece, for example, a disk-like semiconductor wafer is held on a holding surface which is the top surface of the adsorption chuck 361 by a suction means that is not shown. The chuck table 36 constituted as described above is rotated by a pulse motor (not shown) installed in the cylindrical member 34. The chuck table 36 is provided with clamps 362 for fixing an annular frame, which will be described later.

The above first sliding block 32 has on the undersurface a pair of to-be-guided grooves 321 and 321 to be fitted to the above pair of rails 31 and 31 and on the top surface a pair of guide rails 322 and 322 formed parallel to each other in the indexing-feed direction indicated by the arrow Y. The first sliding block 32 constituted as described above can move along the pair of to-be-guided rails 31 and 31 in the processing-feed direction indicated by the arrow X by fitting the to-be-guided grooves 321 and 321 to the pair of guide rails 31 and 31, respectively. The chuck table mechanism 3 in the illustrated embodiment comprises a processing-feed means 37 as a X-axis moving means for moving the first sliding block 32 along the pair of guide rails 31 and 31 in the processing-feed direction indicated by the arrow X. The processing-feed means 37 comprises a male screw rod 371 arranged between the above pair of guide rails 31 and 31 in parallel thereto and a drive source such as a pulse motor 372 for driving the male screw rod 371. The male screw rod 371 is, at its one end, rotatably supported to a bearing block 373 fixed on the above stationary base 2 and is, at the other end, transmission-coupled to the output shaft of the above pulse motor 372. The male screw rod 371 is screwed into a threaded through-hole formed in a female screw block (not shown) projecting from the undersurface of the center portion of the first sliding block 32. Therefore, by driving the male screw rod 371 in a normal direction or adverse direction with the pulse motor 372, the first sliding block 32 is moved along the guide rails 31 and 31 in the processing-feed direction indicated by the arrow X.

The laser beam processing machine 1 in the illustrated embodiment comprises a processing-feed amount detection means 374 for detecting the processing-feed amount of the above chuck table 36. The processing-feed amount detection means 374 comprises a linear scale 374a arranged along the guide rail 31 and a read head 374b which is mounted on the first sliding block 32 and moves along the linear scale 374a together with the first sliding block 32. The read head 374b of this processing-feed amount detection means 374 supplies one pulse signal for every 1 µm to a control means which will be described later in the illustrated embodiment. The control means described later counts the input pulse signals to detect the processing-feed amount of the chuck table 36. When the pulse motor 372 is used as a drive source for the above processing-feed means 37, the processing-feed amount of the chuck table 36 can be detected by counting the drive pulses of the control means described later for outputting a drive signal to the pulse motor 372. When a servo motor is used as a drive source for the above processing-feed means 37, pulse signals outputted from a rotary encoder for detecting the revolution of the servo motor are supplied to the control means described later and the control means counts the input pulse signals, thereby making possible to detect the processing-feed amount of the chuck table 36.

The above second sliding block 33 has on the undersurface a pair of to-be-guided grooves 331 and 331 to be fitted to the pair of guide rails 322 and 322 on the top surface of the above first sliding block 32 and can move in the indexing-feed direction indicated by the arrow Y by fitting the to-be-guided grooves 331 and 331 to the pair of guide rails 322 and 322, respectively. The chuck table mechanism 3 in the illustrated embodiment comprises a first indexing-feed means 38 as a first Y-axis moving means for moving the second sliding block 33 along the pair of guide rails 322 and 322 on the first sliding block 32 in the indexing-feed direction indicated by the arrow Y. The first indexing-feed means 38 comprises a male screw rod 381 which is arranged between the above pair of guide rails 322 and 322 in parallel thereto and a drive source such as a pulse motor 382 for rotary-driving the male screw rod 381. The male screw rod 381 is, at its one end, rotatably supported to a bearing block 383 fixed on the top surface of the above first sliding block 32 and is, at the other end, transmission-coupled to the output shaft of the above pulse motor 382. The male screw rod 381 is screwed into a threaded through-hole formed in a female screw block (not shown) projecting from the undersurface of the center portion of the second sliding block 33. Therefore, by driving the male screw rod 381 in a normal direction or adverse direction with the pulse motor 382, the second sliding block 33 is moved along the guide rails 322 and 322 in the indexing-feed direction indicated by the arrow Y.

The laser beam processing machine 1 in the illustrated embodiment comprises an indexing-feed amount detection means 384 for detecting the indexing-feed amount of the above second sliding block 33. This indexing-feed amount detection means 384 comprises a linear scale 384a arranged along the guide rail 322 and a read head 384b which is mounted on the second sliding block 33 and moves along the linear scale 384a together with the second sliding block 33. The read head 384b of the indexing-feed amount detection means 384 supplies one pulse signal for every 1 µm to the control means described later in the illustrated embodiment. The control means described later counts the input pulse signals to detect the indexing-feed amount of the chuck table 36. When the pulse motor 382 is used as a drive source for the above first indexing-feed means 38, the indexing-feed amount of the chuck table 36 can be detected by counting the drive pulses of the control means described later for outputting a drive signal to the pulse motor 382. When a servo motor is used as a drive source for the above first indexing-feed means 38, pulse signals outputted from a rotary encoder for detecting the revolution of the servo motor are supplied to the control means described later and the control means counts the input pulse signals, thereby making possible to detect the indexing-feed amount of the chuck table 36.

The above laser beam application unit support mechanism 4 comprises a pair of guide rails 41 and 41 mounted on the stationary base 2 and arranged parallel to each other in the indexing-feed direction indicated by the arrow Y and a movable support base 42 mounted on the guide rails 41 and 41 in such a manner that it can move in the direction indicated by the arrow Y. This movable support base 42 consists of a movable support portion 421 movably mounted on the guide rails 41 and 41 and a mounting portion 422 mounted on the movable support portion 421. The mounting portion 422 is provided with a pair of guide rails 423 and 423 extending parallel to each other in the direction indicated by the arrow Z on one of its flanks. The laser beam application unit support mechanism 4 in the illustrated embodiment comprises a second indexing-feed means 43 as a second Y-axis moving means for moving the movable support base 42 along the pair of guide rails 41 and 41 in the indexing-feed direction indicated by the arrow Y. This second indexing-feed means 43 comprises a male screw rod 431 arranged between the above pair of guide rails 41 and 41 in parallel thereto, and a drive source such as a pulse motor 432 for rotary-driving the male screw rod 431. The male screw rod 431 is, at its one end, rotatably supported to a bearing block (not shown) fixed on the above stationary base 2 and is, at the other end, transmission coupled to the output shaft of the above pulse motor 432. The male screw rod 431 is screwed into a threaded through-hole formed in a female screw block (not shown) projecting from the undersurface of the center portion of the movable support portion 421 constituting the movable support base 42. Therefore, by driving the male screw rod 431 in a normal direction or adverse direction with the pulse motor 432, the movable support base 42 is moved along the guide rails 41 and 41 in the indexing-feed direction indicated by the arrow Y.

The laser beam application unit 5 in the illustrated embodiment comprises a unit holder 51 and a laser beam application means 52 secured to the unit holder 51. The unit holder 51 has a pair of to-be-guided grooves 511 and 511 to be slidably fitted to the pair of guide rails 423 and 423 on the above mounting portion 422 and is supported in such a manner that it can move in the direction (Z direction) indicated by the arrow Z by fitting the guide grooves 511 and 511 to the above guide rails 423 and 423, respectively.

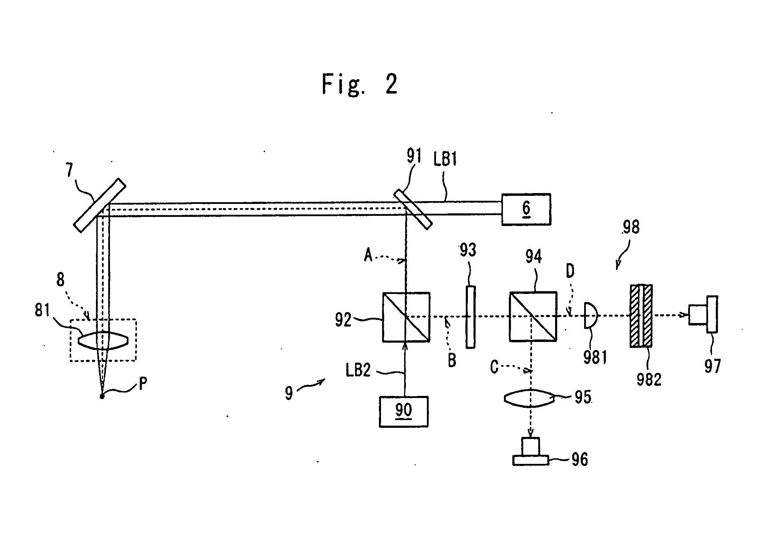

The illustrated laser beam application means 52 comprises a cylindrical casing 521 extending substantially horizontally. In the casing 521, there are installed processing pulse laser beam oscillation means 6 and a direction changing mirror 7 for changing the direction of a processing pulse laser beam oscillated from this processing pulse laser beam oscillation means 6 at 90° to a downward direction in Fig. 2. A condenser 8 comprising a condenser lens 81 for converging a laser beam whose direction has been changed by the direction changing mirror 7 is mounted on the end of the casing 521 (see Fig. 1). The processing pulse laser beam oscillation means 6 oscillates a processing pulse laser beam LB1 of a wavelength having absorptivity for a wafer as the workpiece. As this processing pulse laser beam oscillation means 6 may be used a YVO4 pulse laser oscillator or a YAG pulse laser oscillator which oscillates the processing pulse laser beam LB1 having a wavelength of, for example, 355 nm when the wafer comprises a silicon substrate, silicon carbide substrate, lithium tantalate substrate, glass substrate or quartz substrate.

The condenser 8 comprising the above condenser lens 81 is mounted on the end of the above casing 521. This condenser 8 comprises a set of lenses including the condensing lens 81 and focuses the processing pulse laser beam LB1 which has been oscillated from the above processing pulse laser beam oscillation means 6 and whose direction has been changed by the direction changing mirror 7 at a focal point P.

Still referring to Fig. 2, the laser beam processing machine 1 in the illustrated embodiment comprises a surface position detector 9 for detecting the height position of an exposed surface such as the bottom surface of a via hole formed in the workpiece held on the chuck table. The surface position detector 9 comprises a detection laser beam oscillation means 90 for oscillating a detection laser beam, a dichroic half mirror 91, installed in a first optical path A for connecting the above processing pulse laser beam oscillation means 6 and the condenser 8, for reflecting a detection laser beam oscillated from the detection laser beam oscillation means 90 toward the direction changing mirror 7, and a first cubic splitter 92 as a first beam splitter interposed between the dichroic half mirror 91 and the detection laser beam oscillation means 90. As this detection laser beam oscillation means 90 may be used a He-Ne laser oscillator which oscillates a detection laser beam LB2 having a wavelength of, for example, 632 nm. The dichroic half mirror 91 transmits the processing pulse laser beam LB1 but reflects the detection laser beam LB2 toward the direction changing mirror 7. The first cubic splitter 92 as the first beam splitter transmits the detection laser beam LB2 and deflects light reflected by the dichroic half mirror 91 to a second optical path B.

The surface position detector 9 in the illustrated embodiment comprises a bandpass filter 93 which transmits only reflected light corresponding to the frequency of the detection laser beam LB2 out of reflected light deflected to the second optical path B by the first cubic splitter 92 installed in the second optical path B, a second cubic splitter 94 as a second beam splitter for splitting reflected light passing through the bandpass filter 93 into a third optical path C and a fourth optical path D, a condenser lens 95 for converging 100 % of the reflected light split into the third optical path C by the second cubic splitter 94, and a first light receiving device 96 for receiving the reflected light converged by the condenser lens 95. The first light receiving device 96 supplies a voltage signal corresponding to the quantity of its received light to the control means that will be described later. The surface position detector 9 in the illustrated embodiment comprises a second light receiving device 97 for receiving the reflected light split into the fourth optical path D by the second cubic splitter 94, and light receiving area restricting means 98 for restricting the receiving area of the reflected light to be received by the second light receiving device 97. The light receiving area restricting means 98 in the illustrated embodiment is composed of a cylindrical lens 981 for converging the reflected light split into the fourth optical path D by the second cubic splitter 94 unidimensionally and a unidimensional mask 982 for restricting the reflected light converged unidimensionally by the cylindrical lens 981 to a unit length. The second light receiving device 97 for receiving the reflected light passing through the unidimensional mask 982 supplies a voltage signal corresponding to the quantity of its received light to the control means that will be described later.

The surface position detector 9 in the illustrated embodiment is constituted as described above, and its function will be described hereinbelow.

The detection laser beam LB2 oscillated from the detection laser beam oscillation means 90 passes through the first cubic splitter 92 and reaches the dichroic half mirror 91 to be reflected toward the direction changing mirror 7. The detection laser beam LB2 reflected toward the direction changing mirror 7 is converged by the condenser lens 81, like the above processing pulse laser beam LB1. The detection laser beam LB2 converged as described above is reflected on an exposed surface (the bottom surface of a via hole which will be described later) of the workpiece held on the chuck table 36, and this reflected light reaches the bandpass filter 93 through the condenser lens 81, the direction changing mirror 7, the dichroic half mirror 91 and the first cubic splitter 92 as shown by the broken line in Fig. 2. The reflected light of the above processing pulse laser beam LB1 also reaches the bandpass filter 93 through the same route as that of the detection laser beam LB2. Since the bandpass filter 93 transmits only reflected light corresponding to the frequency of the detection laser beam LB2 as described above, the reflected light of the processing pulse laser beam LB1 is cut off by the bandpass filter 93. Therefore, only the reflected light of the detection laser beam LB2 passes through the bandpass filter 93 and reaches the second cubic splitter 94.

The reflected light of the detection laser beam LB2 which has reached the second cubic splitter 94 is split into the third optical path C and the fourth optical path D. The reflected light split into the third optical path C is 100 % converged by the condenser lens 95 and received by the first light receiving device 96. The first light receiving device 96 supplies a voltage signal corresponding to the quantity of its received light to the control means that will be described later. Meanwhile, the reflected light of the detection laser beam LB2 split into the fourth optical path D is converged unidimensionally by the cylindrical lens 981 and restricted to the predetermined unit length by the unidimensional mask 982 of the light receiving area restricting means 98 and received by the second light receiving device 97. The second light receiving device 97 supplies a voltage signal corresponding to the quantity of its received light to the control means that will be described later.

A description is subsequently given of the quantity of the reflected light of the detection laser beam LB2 received by the first light receiving device 96 and the second light receiving device 97. Since the reflected light of the detection laser beam LB2 to be received by the first light receiving device 96 is 100 % converged by the condenser lens 95, the quantity of received light is constant and a voltage value (V1) output from the first light receiving device 96 is constant (for example, 10 V). Meanwhile, since the reflected light of the detection laser beam LB2 to be received by the second light receiving device 97 is converged unidimensionally by the cylindrical lens 981, restricted to the predetermined unit length by the unidimensional mask 982 and received by the second light receiving device 97, the quantity of light received by the second light receiving device 97 changes according to the position of the focal point P of the detection laser beam LB2 focused by the condenser lens 81 of the condenser 8 in the workpiece. Therefore, the voltage value (V2) output from the second light receiving device 97 changes according to the position of the focal point P of the detection laser beam LB2 in the workpiece.

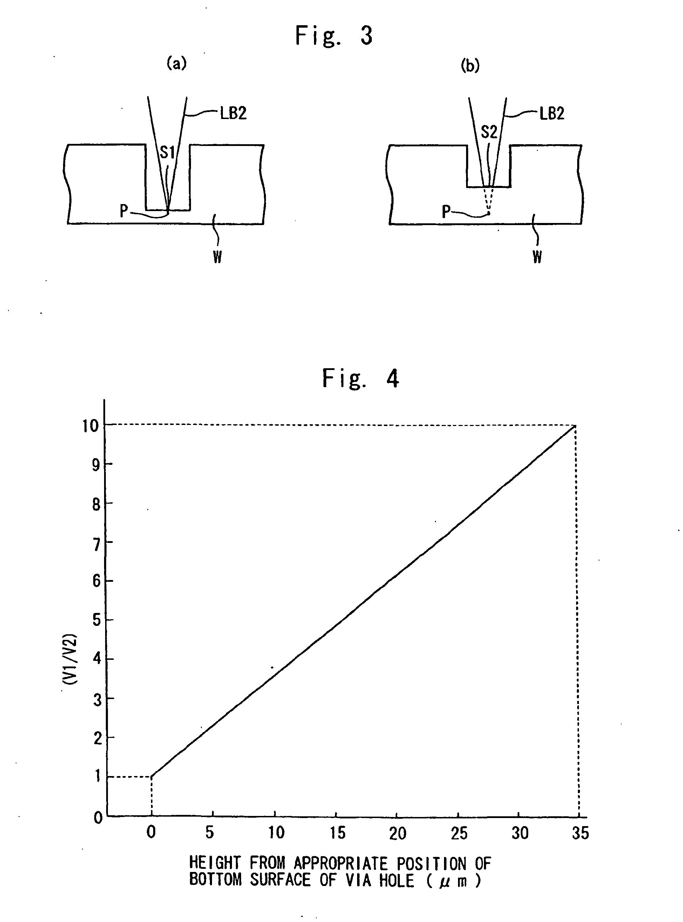

For instance, when a via hole H is formed in the workpiece W at an appropriate depth as shown in Fig. 3(a) and the detection laser beam LB2 is applied by setting its focal point P to the bottom surface of the via hole H, the detection laser beam LB2 having a focal spot area S1 is applied to the bottom surface of the via hole and reflected. This reflected light is split into the third optical path C and the fourth optical path D by the second cubic splitter 94 as described above. Since the reflected light having the focal spot area S1 and split into the third optical path C is 100 % converged by the condenser lens 95, all the quantity of the reflected light is received by the first light receiving device 96. Meanwhile, since the reflected light having the focal spot area S1 and split into the fourth optical path D by the second cubic splitter 94 passes through the cylindrical lens 981 and the unidimensional mask 98 directly as it has the focal spot area S1. Therefore, all the quantity of the reflected light is received by the second light receiving device 97.

When the via hole H is formed shallower than the appropriate depth in the workpiece W as shown in Fig. 3(b) and the detection laser beam LB2 is applied by setting its focal point P to the same depth position as in Fig. 3(a), the detection laser beam LB2 having an area S2 is applied to the bottom surface of the via hole and reflected. This area S2 is larger than the above focal spot area S1. The reflected light having the area S2 is split into the third optical path C and the fourth optical path D by the second cubic splitter 94 as described above. Since the reflected light having the area S2 and split into the third optical path C is 100 % converged by the condenser lens 95, all the quantity of the reflected light is received by the first light receiving device 96. Meanwhile, since the reflected light having the area S2 and split into the fourth optical path D by the second cubic splitter 94 is converged unidimensionally by the cylindrical lens 981, its section becomes elliptic. Since the reflected light converged to have an elliptic section is restricted to the predetermined unit length by the unidimensional mask 982, part of the reflected light split into the fourth optical path D is received by the second light receiving device 97. Therefore, the quantity of reflected light received by the second light receiving device 97 is smaller than the quantity of reflected light received by the first light receiving device 96. The reflected light converged to have an elliptic section is restricted to the predetermined length by the unidimensional mask 982 and part of the reflected light is received by the second light receiving device 97. Therefore, the quantity of the reflected light received by the second light receiving device 97 becomes smaller as the via hole H formed in the workpiece W becomes shallower.

The relationship between the ratio of the voltage value (V1) output from the above first light receiving device 96 to the voltage value (V2) output from the second light receiving device 97 and the depth position of the bottom surface of the via hole to which the detection laser beam LB2 is applied will be described with reference to a control map shown in Fig. 4. In Fig. 4, the horizontal axis shows the height from the appropriate position of the bottom surface of the via hole and the vertical axis shows the ratio (V1/V2) of the voltage value (V1) output from the first light receiving device 96 to the voltage value (V2) output from the second light receiving device 97.

In the example shown in Fig. 4, when the above voltage value ratio (V1/V2) is "1", the via hole H is formed in the workpiece W at an appropriate depth as shown in Fig. 3(a) and the detection laser beam LB2 having the focal spot area S1 is applied to the bottom surface of the via hole H. As shown in Fig. 4, as the height from the appropriate position of the bottom surface of the via hole becomes larger, the above voltage value ratio (V1/V2) increases. Therefore, the height from the appropriate position of the bottom surface of the via hole can be detected by obtaining the above voltage value ratio (V1/V2). The control map shown in Fig. 4 is stored in the memory of the control means that will be described later.

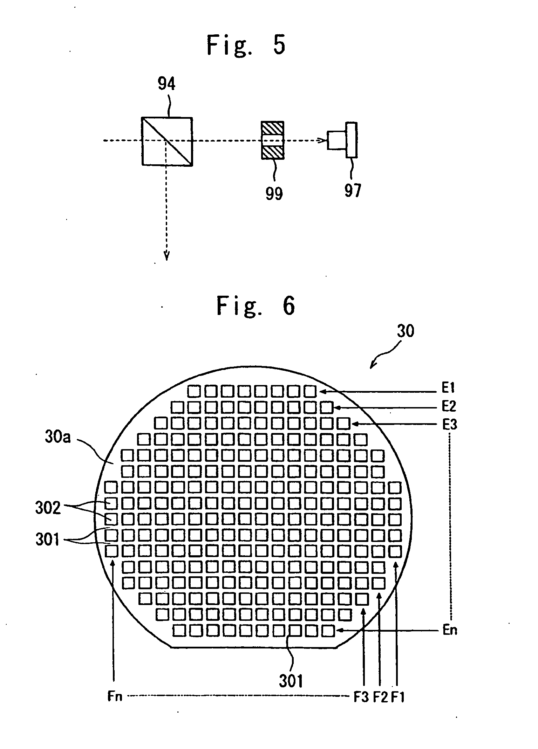

In the surface position detector 9 shown in Fig. 2, the light receiving area restricting means 98 is composed of the cylindrical lens 981 and the unidimensional mask 982. As the light receiving area restricting means 98 may be used a two-dimensional mask 99 for restricting the reflected light split into the fourth optical path D by the above second cubic splitter 94 to a unit area as shown in Fig. 5. When the two-dimensional mask 99 is used, the graph of the control map shown in Fig. 4 shows a parabola.

Returning to Fig. 1, an image pick-up means 11 for detecting the area to be processed by the laser beam application means 52 is mounted on the end portion of the casing 521 constituting the above laser beam application means 52. This image pick-up means 11 is constituted by an infrared illuminating means for applying infrared radiation to the workpiece, an optical system for capturing infrared radiation applied by the infrared illuminating means, and an image pick-up device (infrared CCD) for outputting an electric signal corresponding to infrared radiation captured by the optical system, in addition to an ordinary image pick-up device (CCD) for picking up an image with visible radiation. An image signal is supplied to the control means that will be described later.

The laser beam application unit 5 in the illustrated embodiment comprises a focal point positioning means 53 as a Z-axis moving means for moving the unit holder 51 along the pair of guide rails 423 and 423 in the direction indicated by the arrow Z (direction perpendicular to the holding surface which is the top surface of the adsorption chuck 361) . The focal point positioning means 53 includes a male screw rod (not shown) arranged between the pair of guide rails 423 and 423 and a drive source such as a pulse motor 532 for driving the male screw rod. By driving the male screw rod (not shown) in a normal direction or adverse direction with the pulse motor 532, the unit holder 51 and the laser beam application means 52 comprising the condenser 8 are moved along the guide rails 423 and 423 in the direction indicated by the arrow Z. In the illustrated embodiment, the laser beam application means 52 is moved up by driving the pulse motor 532 in a normal direction and moved down by driving the pulse motor 532 in the adverse direction.

The laser beam processing machine 1 in the illustrated embodiment comprises the control means 10. The control means 10 is composed of a computer comprising a central processing unit (CPU) 101 for carrying out arithmetic processing based on a control program, a read-only memory (ROM) 102 for storing the control program, etc., a read/write random access memory (RAM) 103 for storing the results of operations, a counter 104, an input interface 105 and an output interface 106. Detection signals from the above processing-feed amount detection means 374, the indexing-feed amount detection means 384, the first light receiving device 96, the second light receiving device 97 and the image pick-up means 11 are applied to the input interface 105 of the control means 10. Control signals are applied to the above pulse motor 372, the pulse motor 382, the pulse motor 432, the pulse motor 532, the processing pulse laser beam oscillation means 6, the detection laser beam oscillation means 90 and display means 100 from the output interface 106 of the control means 10. The above random access memory (RAM) 103 has a first storage area 103a for storing the control map shown in Fig. 4, a second storage area 103 for storing the design value data of the workpiece which will be described later and other storage areas.

The laser beam processing machine 1 in the illustrated embodiment is constituted as described above, and its function will be described hereinbelow.

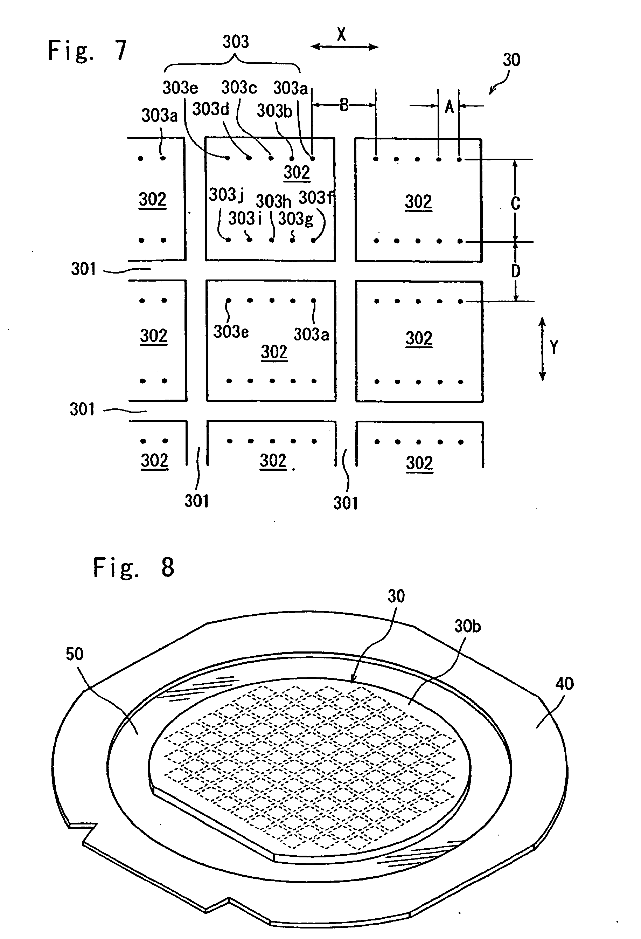

Fig. 6 is a plan view of a semiconductor wafer 30 as the workpiece to be processed by a laser beam. The semiconductor wafer 30 shown in Fig. 6 is a silicon wafer having a thickness of, for example, 100 µm, a plurality of areas are sectioned by a plurality of dividing lines 301 formed in a lattice pattern on the front surface 30a, and a device 302 such as IC or LSI is formed in each of the sectioned areas. The devices 302 are all the same in constitution. A plurality of electrodes 303 (303a to 303j) are formed on the surface of each device 302 as shown in Fig. 7. In the illustrated embodiment, electrodes 303a and 303f, electrodes 303b and 303g, electrodes 303c and 303h, electrodes 303d and 303i, and electrodes 303e and 303j are at the same positions in the X direction. Via holes reaching the electrodes 303 are formed in portions corresponding to the plurality of electrodes 303 (303a to 303j) from the rear surface 30b. The intervals A between adjacent electrodes 303 (303a to 303j) in the X direction (horizontal direction in Fig. 7) and the intervals B between adjacent electrodes in the X direction (horizontal direction in Fig. 7) with the dividing line 301 interposed therebetween, that is, between the electrodes 303e and 303a out of the electrodes 303 formed on each device 302 are the same in the illustrated embodiment. The intervals C between adjacent electrodes 303 (303a to 303j) in the Y direction (vertical direction in Fig. 7) and the intervals D between adjacent electrodes in the Y direction (vertical direction in Fig. 7) with the dividing line 301 interposed therebetween, that is, between the electrodes 303f and 303a and between the electrodes 303j and 303e out of the electrodes 303 formed on each device 302 are the same in the illustrated embodiment. The design value data of the semiconductor wafer 30 constituted as described above, which include the numbers of devices 302 disposed in rows E1 to En and columns F1 to Fn shown in Fig. 6 and the above intervals A, B, C and D, are stored in the second storage area 203b of the above random access memory (RAM) 103.

An example of laser processing for forming a via hole in portions corresponding to the electrodes 303 (303a to 303j) of each device 302 formed on the above semiconductor wafer 30 by using the above laser beam processing machine will be described hereinunder.

The front surface 30a of the semiconductor wafer 30 constituted as described above is put on a protective tape 50 which is composed of a synthetic resin sheet such as a polyolefin sheet and mounted on an annular frame 40 as shown in Fig. 8. Therefore, the rear surface 30b of the semiconductor wafer 30 faces up. The protective tape 50 side of the semiconductor wafer 30 supported to the annular frame 40 through the protective tape 50 is placed on the chuck table 36 of the laser beam processing machine shown in Fig. 1. The semiconductor wafer 30 is suction held on the chuck table 36 through the protective tape 50 by activating the suction means that is not shown. The annular frame 40 is fixed by the clamps 362.

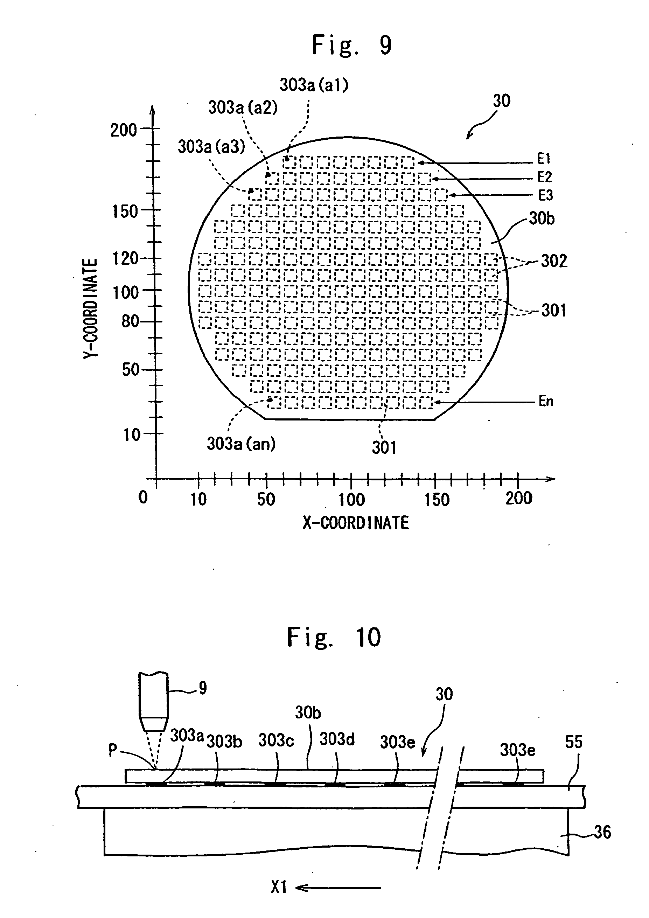

The chuck table 36 suction holding the semiconductor wafer 30 as described above is brought to a position right below the image pick-up means 11 by the processing-feed means 37. After the chuck table 36 is positioned right below the image pick-up means 11, the semiconductor wafer 30 on the chuck table 36 is located at the coordinate position shown in Fig. 9. In this state, alignment work is carried out to check whether the dividing lines 301 formed in a lattice pattern on the semiconductor wafer 30 held on the chuck table 36 are parallel to the X direction and the Y direction. That is, an image of the semiconductor wafer 30 held on the chuck table 36 is picked up by the image pick-up means 11 to carry out image processing such as pattern matching, etc. for the alignment work. Although the dividing line 301 formed front surface 30a of the semiconductor wafer 30 faces down at this point, as the image pick-up means 11 comprises an infrared illuminating means, an optical system for capturing infrared radiation and an image pick-up device (infrared CCD) for outputting an electric signal corresponding to the infrared radiation as described above, an image of the dividing lines 301 can be picked up through the rear surface 30b.

Thereafter, the chuck table 36 is moved to position a device 302 at the most left end in Fig. 9 in the top row E1 out of the devices 302 formed on the semiconductor wafer 30 right below the image pick-up means 11. Further, an upper left electrode 303a in Fig. 9 out of the electrodes 303 (303a to 303j) formed on the device 302 is positioned right below the image pick-up means 11. After the image pick-up means 11 detects the electrode 303a in this state, its coordinate values (a1) are supplied to the control means 10 as first feed start position coordinate values. The control means 10 stores the coordinate values (a1) in the random access memory (RAM) 103 as first feed start position coordinate values (feed start position detecting step). Since there is a predetermined space between the image pick-up means 11 and the condenser 8 of the laser beam application means 52 in the X direction at this point, a value obtained by adding the interval between the above image pick-up means 11 and the condenser 8 is stored as an X coordinate value.

After the first feed start position coordinate values (a1) of the device 302 in the top row E1 in Fig. 9 are detected as described above, the chuck table 36 is moved a distance corresponding to the interval between dividing lines 301 in the Y direction and moved in the X direction to position a device 302 at the most left end in the second row E2 from the top in Fig. 9 right below the image pick-up means 11. Further, an upper left electrode 303a in Fig. 9 out of the electrodes 303 (303a to 303j) formed on the device 302 is positioned right below the image pick-up means 11. After the image pick-up means 11 detects the electrode 303a in this state, its coordinate values (a2) are supplied to the control means 10 as second feed start position coordinate values. The control means 10 stores the coordinate values (a2) in the random access memory (RAM) 103 as second feed start position coordinate values. Since there is the predetermined space between the image pick-up means 11 and the condenser 8 of the laser beam application means 52 in the X direction at this point as described above, a value obtained by adding the interval between the image pick-up means 11 and the condenser 8 is stored as an X coordinate value. Thereafter, the control means 10 carries out the above indexing and feed start position detecting steps repeatedly up to the bottom row En in Fig. 9 to detect the feed start position coordinate values (a3 to an) of the devices 302 formed in rows and store them in the random access memory (RAM) 103.

Next comes the step of forming a via hole in portions corresponding to the electrodes 303 (303a to 303j) formed on each device 302 of the semiconductor wafer 30. In the via hole forming step, the processing-feed means 37 is first activated to move the chuck table 36 so as to bring the point of the first feed start position coordinate values (a1) stored in the above random access memory (RAM) 103 to a position right below the condenser 8 of the laser beam application means 52. Fig. 10 shows that the point of the first feed start position coordinate values (a1) is positioned right below the condenser 8. From the state shown in Fig. 10, the control means 10 controls the laser beam application means 52 to apply the processing laser beam LB1 from the condenser 8.

The processing conditions in the above drilling step are set as follows, for example.
Light source: LD excited Q switch Nd: YV04 pulse laser
Wavelength: 355 nm
Energy density: 30 J/cm²
Focusing spot diameter: 70 µm

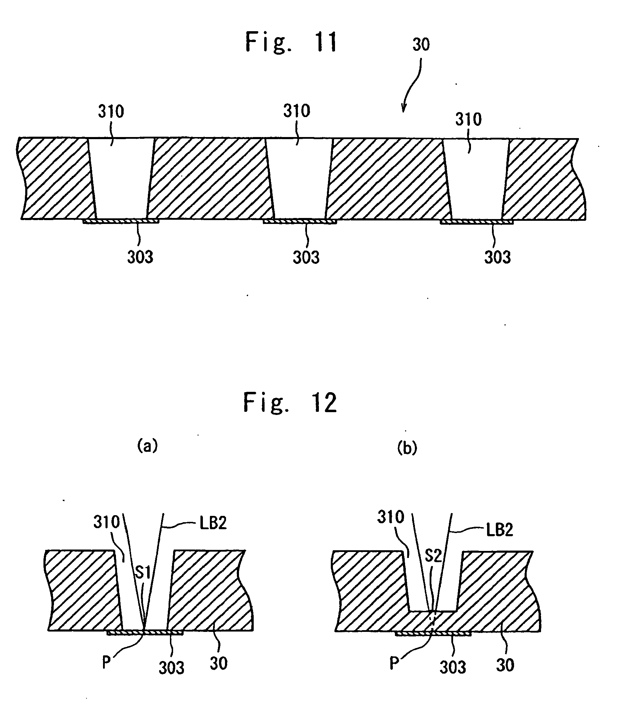

When the drilling step is carried out under the above processing conditions, a via hole having a depth of about 2 µm can be formed in the silicon wafer with one pulse of the pulse laser beam. Therefore, a via hole 310 reaching the electrode 303 can be formed by applying 50 pulses of the pulse laser beam to a silicon wafer having a thickness of 100 µm as shown in Fig. 11.

After the via hole forming step is carried out at the point of the first feed start position coordinate values (a1) as described above, the processing-feed means 37 is activated to move the chuck table 36 a distance corresponding to the above interval A so as to position a portion corresponding to the electrode 303b right below the condenser 8 of the laser beam application means 52. Then, the above via hole forming step is carried out. By positioning portions corresponding to all the electrodes 303 formed on the semiconductor wafer 30 right below the condenser 8 of the laser beam application means 52 and carrying out the above via hole forming step as described above, via holes 310 reaching the electrodes 303 can be formed from the rear surface 30b in the semiconductor wafer 30.

Although via holes 310 reaching the electrodes 303 can be formed from the rear surface 30b in the semiconductor wafer 30 by carrying out the above drilling step, some via holes 310 may not reach the electrodes 303. Therefore, it is necessary to check if the via holes 310 reach the electrodes 303 or not. In the illustrated laser beam processing machine 1, the above surface position detector 9 is activated to carry out the step of detecting the height position of the bottom surface of each via hole 310 formed in the semiconductor wafer 30.

The bottom position detection step is carried out by positioning each via hole 310 formed in the semiconductor wafer 30 right below the condenser 8 and applying the detection laser beam LB2 from the detection laser beam oscillation means 90 of the surface position detector 9. The via holes 310 formed in the semiconductor wafer 30 can be positioned by moving the chuck table 36 based on the coordinate data of the electrodes 303 stored in the random access memory (RAM) 103 of the control means 10 like the above via hole forming step.

An example of the detection laser beam LB2 applied in the bottom position detection step is described below.
Light source: He-Ne continuous wave laser
Wavelength: 633 nm
Average output: 2 to 3 mW

The detection laser beam LB2 oscillated from the detection laser beam oscillation means 90 is converged by the condenser lens 8 through the first cubic splitter 92, the dichroic half mirror 91 and the direction changing mirror 7. The focal point P of the detection laser beam LB2 focused by the condenser lens 8 is set to the top surface of the electrode 303 at the bottom of the via hole 310 formed in the semiconductor wafer 30 as shown in Fig. 12. The focal point P can be set by controlling the focal point positioning means 53 as the Z-axis moving means by means of the control means 10 based on the height position of the electrode 303 formed on the semiconductor wafer 30 held on the chuck table 36.

When the via hole 310 formed in the semiconductor wafer 30 reaches the electrode 303 as shown in Fig. 12(a), the detection laser beam LB2 having a focal spot area S1 is applied to the top surface of the electrode 303. The detection laser beam LB2 having a focal spot area S1 applied to the top surface of the electrode 303 is reflected on the top surface of the electrode 303 and reaches the second cubic splitter 94 through the condenser lens 8, the direction changing mirror 7, the dichroic half mirror 91, the first cubic splitter 92 and the bandpass filter 93. The reflected light of the detection laser beam LB2 reaching the second cubic splitter 94 is split into the third optical path C and the fourth optical path D. The reflected light split into the third optical path C is 100 % converged by the condenser lens 95 and received by the first light receiving device 96. Therefore, the voltage value (V1) output from the first light receiving device 96 becomes 10 V as described above. Meanwhile, though the reflected light of the detection laser beam LB2 split into the fourth optical path D is received by the second light receiving device 97 through the cylindrical lens 981 and the unidimensional mask 982, as the reflected light has a focal spot area S1 all the quantity of the reflected light is received by the second light receiving device 97 as described above. Therefore, the voltage value (V2) output from the second light receiving device 97 becomes 10 V. As a result, the ratio (V1/V2) of the voltage value V(1) output from the first light receiving device 96 to the voltage value (V2) output from the second light receiving device 97 becomes "1" and the control means 10 judges from the control map shown in Fig. 4 that the via hole 310 is formed at an appropriate depth and reaches the electrode 303.

When the via hole 310 formed in the semiconductor wafer 30 is shallow and does not reach the electrode 303 as shown in Fig. 12(b), the detection laser beam LB2 having an area S2 is reflected on the bottom surface 310a of the via hole 310. Therefore, the reflected light of the detection laser beam LB2 is 100 % received by the first light receiving device 96 as described above whereas the quantity of light received by the second light receiving device 97 decreases in inverse proportion to the area S2 of the detection laser beam LB2 applied to the bottom surface 310a of the via hole 310. Therefore, as the via hole 310 formed in the semiconductor wafer 30 is deeper, that is, the bottom surface 310a of the via hole 310 is closer to the electrode 303, the ratio (V1/V2) of the voltage value (V1) output from the first light receiving device 96 to the voltage value (V2) output form the second light receiving device 97 becomes closer to "1'' and as the via hole 310 formed in the semiconductor wafer 30 is shallower, the ratio (V1/V2) of the voltage value (V1) output from the first light receiving device 96 to the voltage value (V2) output form the second light receiving device 97 becomes larger.

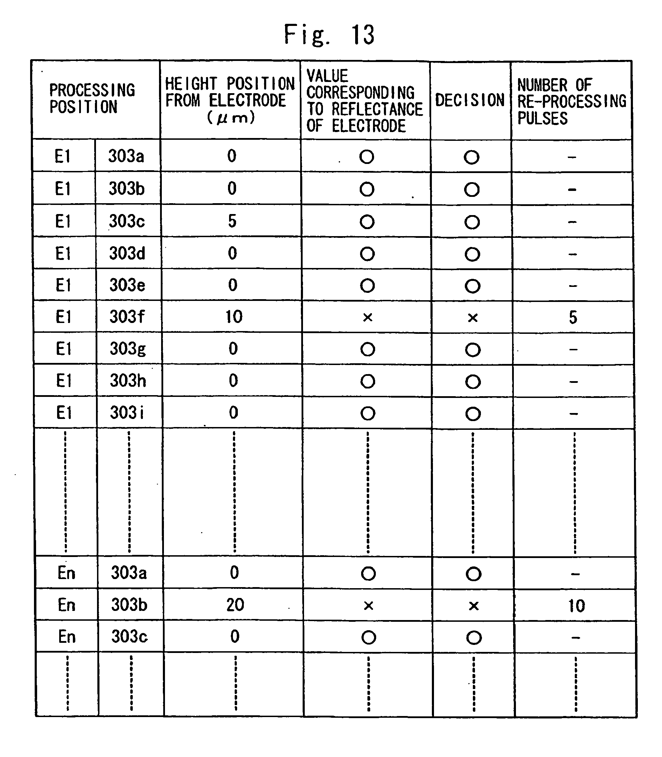

The above bottom position detection step is carried out on all the via holes 310 formed in the semiconductor wafer 30, and the control means 10 obtains the height positions of the via holes based on the control map shown in Fig.4, that is, the height positions of the bottom surfaces 310a of the via holes 310 from the electrodes 303 to prepare a decision map for the via holes 310 as shown in Fig. 13.

The control means 10 stores data on the reflectance of silicon forming the wafer and the reflectance of a metal such as copper forming the electrodes in the predetermined area of the random access memory (RAM) 103 and judges whether the output value from the first light receiving device 96 is a value corresponding to the reflectance of the electrode 303. That is, as the reflectance of silicon is 57.48 % and the reflectance of copper forming the electrodes 303 is 43.27 %, the quantity of light received by the first light receiving device 96 changes according to whether the via hole 310 reaches the electrode 303 or not. Therefore, when the output value from the first light receiving device 96 is a value corresponding to the reflectance of copper, it is known that the via hole 310 formed in the semiconductor wafer 30 reaches the electrode 303 surely. Therefore, even if the ratio (V1/V2) of the voltage value (V1) output from the first light receiving device 96 to the voltage value (V2) output from the second light receiving device 97 is larger than "1" and the obtained height position of the bottom surface 310a of the via hole 310 from the electrode 303 is higher than that of the electrode 303, it can be judged that the via hole 310 reaches the electrode 303.

After the decision map shown in Fig. 13 is prepared as described above, the control means 10 sets the number of re-processing pulses for the via holes 310 which are judged not to reach the electrodes 303 (303f on E1 and 303b on En in the embodiment shown in Fig. 13). That is, since a via hole having a depth of about 2 µm can be formed with one pulse of the pulse laser beam under the above processing conditions, the number of pulses is set to 5 for the via hole 310 which should reach the electrode 303f on E1 because it must be made 10 µm deeper and the number of pulses is set to 10 for the via hole 310 which should reach the electrode 303b on En because it must be made 20 µm deeper. The decision map prepared as described above is displayed on the display means 100.

After the numbers of re-processing pulses are set in the decision map shown in Fig. 13, the control means 10 moves the chuck table 36 to position the point of the coordinate values of the electrode 303f on E1 right below the condenser 8 to apply 5 pulses of the processing pulse laser beam LB1 and moves the chuck table 36 to position the point of the coordinate values of the electrode 303b right below the condenser 8 and applies 10 pulses of the processing pulse laser beam LB1. As a result, the via hole 310 which should reach the electrode 303f on E1 and the via hole 310 which should reach the electrode 303b on En are re-processed so that they reach these electrodes 303.

## Claims

1. A surface position detector (9) for detecting the height position of an exposed portion of a workpiece held on the holding surface of a chuck table (36), the detector comprising the chuck table having the holding surface for holding the workpiece, a X-axis moving means for moving the chuck table in the X direction and a Y-axis moving means for moving the chuck table in the Y direction perpendicular to the X direction, wherein
the detector further comprises a detection laser beam oscillation means (90) for oscillating a detection laser beam, a condenser (8) for converging the detection laser beam oscillated from the detection laser beam oscillation means (90) and applying it to an exposed portion of the workpiece held on the chuck table(36), a first beam splitter (92) installed in a first optical path, which connects the detection laser beam oscillation means(90) and the condenser (8) and deflects the reflected light of the detection laser beam reflected on the exposed portion of the workpiece to a second optical path, a second beam splitter (94) installed in the second optical path, which splits the reflected light of the detection laser beam deflected by the first beam splitter (92) into a third optical path and a fourth optical path, a first light receiving device (96) for receiving 100 % of the reflected light split into the third optical path by the second beam splitter (94), a second light receiving device (97) for receiving the reflected light split into the fourth optical path by the second beam splitter (94), a light receiving area restricting means (98) installed in the fourth optical path and being arranged for restricting the receiving area of the reflected light to be received by the second light receiving device (97), and a control means (10) for obtaining the height position of the exposed portion of the workpiece based on detection signals from the first light receiving device (96) and the second light receiving device (97); and
the control means (10) is arranged to calculate the ratio of the quantity of light received by the first light receiving device (96) to the quantity of light received by the second light receiving device (97) based on detection signals from the first light receiving device (96) and the second light receiving device (97) and is arranged for obtaining the height position of the exposed portion of the workpiece based on the ratio, the control means (10) is equipped with a memory (103) having a storage area (103a) having stored therein a control map in which correlation between the ratio of the quantity of light received by the first light receiving device (96) to the quantity of light received by the second light receiving device (97) and the height position of the exposed portion of the workpiece is set and is arranged to obtain the height position of the exposed portion of the workpiece by collating the ratio of the quantity of light received by the first light receiving device (96) to the quantity of light received by the second light receiving device (97) with the control map, and wherein the exposed portion of the workpiece is the bottom surface of a via hole formed in the workpiece and correlation between the ratio of the quantity of light received by the first light receiving device (96) to the quantity of light received by the second light receiving device (97) and the height position of the bottom surface of a via hole formed in the workpiece is set in the control map.

2. The surface position detector (9) according to claim 1, wherein the memory (103) of the control means (10) has a storage area having stored therein data on the reflectances of a plurality of substances and the control means (10) is arranged for judging whether a via hole formed in the workpiece reaches from a processed substance to another substance based on the quantity of light received by the first light receiving device (96).

3. A laser beam processing machine equipped with the surface position detector (9) according to claim 1 or 2 which comprises a processing laser beam oscillation means (6) for oscillating a processing laser beam towards the condenser (8) and a dichroic half mirror (91) interposed between the condenser (8) and the first beam splitter (91), the first beam splitter arranged for transmiting the processing laser beam oscillated from the processing laser beam oscillation means (6) and for deflecting the detection laser beam oscillated from the detection laser beam oscillation means (90) towards the condenser (8).

## Patentansprüche

1. Flächenpositionsdetektor (9) zum Detektieren der Höhenposition eines freiliegenden Bereichs eines auf der Halteoberfläche eines Bohrtisches (36) gehaltenen Werkstückes, wobei der Detektor folgendes aufweist: den Bohrtisch mit der Halteoberfläche zum Halten des Werkstücks, ein X-Achse-Bewegungsmittel zum Bewegen des Bohrtisches in die X-Richtung, und ein Y-Achse-Bewegungsmittel zum Bewegen des Bohrtisches in die Y-Richtung senkrecht zur X-Richtung, wobei
der Detektor weiterhin folgendes aufweist: ein Detektionslaserstrahl-Oszillierungsmittel (90) zum Oszillieren eines Detektionslaserstrahls, einen Kondensor (8) zum Konvergieren des vom Detektionslaserstrahl-Oszillierungsmittel (90) oszillierten Detektionslaserstrahls und zum Applizieren dieses Strahls auf einen freiliegenden Bereich des auf dem Bohrtisch (36) gehaltenen Werkstücks, einen ersten Stahlteiler (92), der in einem ersten optischen Weg angebracht ist, der das Detektionslaserstrahl-Oszillierungsmittel (90) und den Kondensor (8) verbindet und das reflektierte Licht des Detektionslaserstrahls, der auf dem freiliegenden Bereich des Werkstücks reflektiert wird, auf einen zweiten optischen Weg ablenkt, einen zweiten in dem zweiten optischen Weg angebrachten Strahlteiler (94), der das reflektierte Licht des vom ersten Strahlteiler (92) abgelenkten Detektionslaserstrahls in einen dritten optischen Weg und einen vierten optischen Weg teilt, eine erste lichtempfangende Einrichtung (96) zum Empfangen von 100 % des vom zweiten Strahlteiler (94) in den dritten optischen Weg hineingeteilten reflektierten Lichts, eine zweite lichtempfangende Einrichtung (97) zum Empfangen des vom zweiten Strahlteiler (94) in den vierten optischen Weg hineingeteilten reflektierten Lichts, ein Lichtempfangsbereich-Begrenzungsmittel (98), das im vierten optischen Weg angebracht und ausgebildet ist, um den Empfangsbereich des von der zweiten lichtempfangenden Einrichtung (97) zu empfangenden reflektierten Lichts zu begrenzen, und ein Steuermittel (10) zum Erhalten der Höhenposition des freiliegenden Bereichs des Werkstücks basierend auf Detektionssignalen von der ersten lichtempfangenden Einrichtung (96) und der zweiten lichtempfangenden Einrichtung (97); und wobei
das Steuermittel (10) ausgebildet ist, um das Verhältnis der von der ersten lichtempfangenden Einrichtung (96) empfangenen Lichtmenge zu der von der zweiten lichtempfangenden Einrichtung (97) empfangenen Lichtmenge zu berechnen, und zwar basierend auf Detektionssignalen von der ersten lichtempfangenden Einrichtung (96) und der zweiten lichtempfangenden Einrichtung (97), und wobei das Steuermittel (10) ausgebildet ist, um die Höhenposition des freiliegenden Bereichs des Werkstücks basierend auf dem Verhältnis zu erhalten,
wobei das Steuermittel (10) mit einem Speicher (103) bestückt ist, der einen Speicherbereich (103a) hat, auf dem eine Steuertabelle gespeichert ist, in der Korrelation zwischen dem Verhältnis der von der ersten lichtempfangenden Einrichtung (96) empfangenen Lichtmenge zu der von der zweiten lichtempfangenden Einrichtung (97) empfangenen Lichtmenge und der Höhenposition des freiliegenden Bereichs des Werkstücks festgelegt ist, und wobei das Steuermittel (10) ausgebildet ist, um die Höhenposition des freiliegenden Bereichs des Werkstücks zu erhalten, und zwar durch Vergleichen des Verhältnisse der von der ersten lichtempfangenden Einrichtung (96) empfangenen Lichtmenge zu der von der zweiten lichtempfangenden Einrichtung (97) empfangenen Lichtmenge mit der Steuertabelle, und wobei der freiliegende Bereich des Werkstücks die Bodenfläche einer in dem Werkstück ausgebildeten Bohrung ist, und wobei Korrelation zwischen dem Verhältnis der von der ersten lichtempfangenden Einrichtung (96) empfangenen Lichtmenge zu der von der zweiten lichtempfangenden Einrichtung (97) empfangenen Lichtmenge und der Höhenposition der Bodenfläche einer in dem Werkstück ausgebildeten Bohrung in der Steuertabelle festgelegt ist.

2. Flächenpositionsdetektor (9) nach Anspruch 1, wobei der Speicher (103) des Steuermittels (10) einen Speicherbereich hat, in dem Daten zum Reflektionsvermögen einer Mehrzahl von Materialien gespeichert sind, und das Steuermittel (10) ausgebildet ist, um basierend auf der von der ersten lichtempfangenden Einrichtung (96) empfangenen Lichtmenge zu beurteilen, ob eine in dem Werkstück ausgebildete Bohrung von einem bearbeiteten Material zu einem anderen Material reicht.

3. Laserstrahl-Bearbeitungsmaschine, ausgerüstet mit dem Flächenpositionsdetektor (9) gemäß Anspruch 1 oder 2, umfassend ein Bearbeitungslaserstrahl-Oszillierungsmittel (6) zum Oszillieren eines Bearbeitungslaserstrahls in Richtung auf den Kondensor (8) und einen dichromatischen Halbspiegel (91), der zwischen dem Kondensor (8) und dem ersten Strahlteiler (91) angeordnet ist, wobei der erste Strahlteiler ausgebildet ist, um den vom Bearbeitungslaserstrahl-Oszillierungsmittel (6) oszillierten Bearbeitungslaserstrahl weiterzuleiten und um den vom Detektionslaserstrahl-Oszillierungsmittel (90) in Richtung auf den Kondensor (8) oszillierten Detektionslaserstrahl abzulenken.

## Revendications

1. Détecteur de position de surface (9) destiné à détecter la position en hauteur d'une partie exposée d'une pièce d'ouvrage maintenue sur la surface de serrage d'une table de travail (36), le détecteur comprenant la table de travail ayant la surface de serrage destinée à maintenir la pièce d'ouvrage, un moyen de déplacement dans l'axe X destiné à déplacer la table de travail dans la direction X et un moyen de déplacement dans l'axe Y destiné à déplacer la table de travail dans la direction Y perpendiculaire à la direction X, où
le détecteur comprend en outre un moyen d'oscillation de faisceau laser de détection (90) destiné à faire osciller un faisceau laser de détection, un condenseur (8) destiné à faire converger le faisceau laser de détection oscillé depuis le moyen d'oscillation de faisceau laser de détection (90) et à l'appliquer sur une partie exposée de la pièce d'ouvrage maintenue sur la table de travail (36), un premier séparateur de faisceau (92) installé dans un premier chemin optique, qui connecte le moyen d'oscillation de faisceau laser de détection (90) et le condenseur (8) et dévie la lumière réfléchie du faisceau laser de détection réfléchi sur la partie exposée de la pièce d'ouvrage vers un deuxième chemin optique, un deuxième séparateur de faisceau (94) installé dans le deuxième chemin optique, qui sépare la lumière réfléchie du faisceau laser de détection dévié par le premier séparateur de faisceau (92) en un troisième chemin optique et un quatrième chemin optique, un premier dispositif de réception de lumière (96) destiné à recevoir 100 % de la lumière réfléchie séparée en le troisième chemin optique par le deuxième séparateur de faisceau (94), un deuxième dispositif de réception de lumière (97) destiné à recevoir la lumière réfléchie séparée en le quatrième chemin optique par le deuxième séparateur de faisceau (94), un moyen de limitation de zone de réception de lumière (98) installé dans le quatrième chemin optique et étant agencé pour limiter la zone de réception de la lumière réfléchie pour être reçue par le deuxième dispositif de réception de lumière (97) et un moyen de commande (10) destiné à obtenir la position en hauteur de la partie exposée de la pièce d'ouvrage sur la base de signaux de détection provenant du premier dispositif de réception de lumière (96) et du deuxième dispositif de réception de lumière (97), et
le moyen de commande (10) est agencé pour calculer le rapport de l'intensité de lumière reçue par le premier dispositif de réception de lumière (96) sur l'intensité de lumière reçue par le deuxième dispositif de réception de lumière (97) sur la base des signaux de détection provenant du premier dispositif de réception de lumière (96) et du deuxième dispositif de réception de lumière (97) et est agencé pour obtenir la position en hauteur de la partie exposée de la pièce d'ouvrage sur la base du rapport, le moyen de commande (10) est équipé d'une mémoire (103) comportant une zone de mémorisation (103a) ayant mémorisé dans celle-ci une mappe de commande dans laquelle une corrélation entre le rapport de l'intensité de lumière reçue par le premier dispositif de réception de lumière (96) sur l'intensité de lumière reçue par le deuxième dispositif de réception de lumière (97) et la position en hauteur de la partie exposée de la pièce d'ouvrage est établie, et est agencé pour obtenir la position en hauteur de la partie exposée de la pièce d'ouvrage en collationnant le rapport de l'intensité de lumière reçue par le premier dispositif de réception de lumière (96) sur l'intensité de lumière reçue par le deuxième dispositif de réception de lumière (97) avec la mappe de commande, et où la partie exposée de la pièce d'ouvrage se trouve dans la surface inférieure d'un trou traversant formé dans la pièce d'ouvrage et une corrélation entre le rapport de l'intensité de lumière reçue par le premier dispositif de réception de lumière (96) sur l'intensité de lumière reçue par le deuxième dispositif de réception de lumière (97) et la position en hauteur de la surface inférieure d'un trou traversant formé dans la pièce d'ouvrage est établie dans la mappe de commande.

2. Détecteur de position de surface (9) selon la revendication 1, dans lequel la mémoire (103) du moyen de commande (10) comporte une zone de mémorisation comportant mémorisées dans celle-ci des données sur les facteurs de réflexion d'une pluralité de substances et le moyen de commande (10) est agencé pour estimer si un trou traversant formé dans la pièce d'ouvrage s'étend d'une substance traitée à une autre substance sur la base de l'intensité de lumière reçue par le premier dispositif de réception de lumière (96).

3. Machine de traitement de faisceau laser équipée du détecteur de position de surface (9) selon la revendication 1 ou 2, qui comprend un moyen d'oscillation de faisceau laser de traitement (6) destiné à faire osciller un faisceau laser de traitement en direction du condenseur (8) et un demi-miroir dichroïque (91) intercalé entre le condenseur (8) et le premier séparateur de faisceau (91), le premier séparateur de faisceau étant agencé pour transmettre le faisceau laser de traitement oscillé depuis le moyen d'oscillation de faisceau laser de traitement (6) et destiné à dévier le faisceau laser de détection oscillé depuis le moyen d'oscillation de faisceau laser de détection (90) vers le condenseur (8).
